# EUROPEAN PATENT APPLICATION

(11) **EP 1 908 683 A2**
(43) Date of publication of application: **09.04.2008**
(21) Application number: 06755372.7
(22) Date of filing: 24.05.2006
(51) Int. Cl.: B63H 13/00

(54) **SELF-PROPELLED VESSEL WHICH GENERATES ELECTRIC POWER USING ALTERNATIVE ENERGY SOURCES**

(30) Priority: 20.06.2005 ES 200501578
(71) Applicant: Helionauta, S.L., 46005 Valencia (ES)
(72) Inventor: MARTINEZ MESAS, Rafael, E-46005 Valencia (ES)
(74) Representative: Ungria Lopez, Javier
(86) International application number: PCT/ES2006/000289
(87) International publication number: WO 2006/136626

(57) **Abstract**

The present invention relates to a ship that is self-sufficient in energy consumption, since its needs come from the sun and wind; ecological, due to not contaminating with waste of any kind, contributing to caring for the environment, keeping it clean; being economically profitable because its electricity generation and accumulation permits the sale of surpluses to the distribution grid; the capture of energy will be done by means of two horizontal axis wind turbine generators and by means of solar modules which comprise the cover for the deck.

## Description

### TECHNICAL FIELD OF THE INVENTION

The present invention relates to a propulsion device for a ship or floating device by means of alternative energies. The energy necessary for propulsion of the vessel is produced by wind turbine generators and photovoltaic solar panels. Such storage devices will be provided for the energy produced, by way of accumulators. This energy will be consumed by means of electric motors which, moreover, possess the capacity for charging the batteries when these are not consuming energy.

When the energy generated is greater than that consumed or required, it will be able to be connected to the public grid, supplying it, with which the ship will carry out the work of an electricity generator station.

### STATE OF THE ART

There are many devices currently known for wind and solar propulsion for ships. Among these known forms of propulsion one can, in order to mention some outstanding ones, point to US patents Nos 4,353,702 and 4,775,340, European patents Nos. 24,998 and 193,624, British patents Nos. 1,481,699 and 2,063,804, German patents Nos. 2,540,167, 2,705,093, 3,125,491 and 3,917,525, French patent No. 2,524,569, the Spanish utility model No. U8303998, and the Spanish invention patent No. P8800763.

In these forms of embodiment of ships driven by wind energy, the energy is transmitted directly to the propeller by mechanical transmission. For this reason, there is a lack of a device that includes the combined action of wind and solar energy by means of means of transformation into mechanical energy, which are easily handled, resistant and reliable, and which, moreover, permit a graduation in the speed and orientation of the ship to be performed comfortably and simply.

Moreover, a greater exploitation is had of the surplus production that is not consumed by the actual ship for its motion, since that surplus can be transferred to the network, being sold to the public grid in accordance with the provisions contained in Royal Decree 436/2004, of 12 March 2004, and also Act 54/1997, of 27 November 1997.

### DESCRIPTION OF THE INVENTION

The ship will basically consist of certain devices for the generation, storage and consumption of energy.

In order to produce the energy necessary for driving the unit and feeding the electrical grid, some wind turbine generators will be used which will provide the greater part of the energy generated by the system. The purpose of the rotor, of course, is to convert the linear motion of the wind into mechanical energy that can be used to run the generator.

Wind turbine generators consist of a rotor with various blades with systems for automatic orientation and braking. By means of the automatic orientation system, it is possible to increase to the maximum the capacity for capturing the different air currents even when they adopt different directions. The automatic braking device acts in the event of the maximum speeds being exceeded for which the system was designed, which would otherwise endanger both the structure where it is located and also the actual elements making up the wind turbine generator. Therefore, in such conditions, they would have to be halted and orientated away from the wind in order to avoid damage to the turbine.

The said wind turbine generators will be located on individual towers on the deck of the ship which, as well as providing the necessary rigidity for the array, will also be constructed with materials that are very light, which will help to keep down the weight of the array.

As well as the aforementioned wind turbine generators, the remaining percentage of the energy will be contributed by some photovoltaic solar modules installed on the vessel itself. The use of photovoltaic solar energy combined with wind energy provides a good energy balance in places where the wind is pronounced.

They are constructed from monocrystalline silicon cells or similar, thereby guaranteeing the production of energy from dawn to dusk. Moreover, they have a device that modifies the inclination of the panels in order to achieve a greater capture of light depending on the angle of incidence of the solar rays.

The functionality of the solar panels is not just for energy generation since they are in turn exploited as an enclosure on the deck of the ship, permitting more pleasurable sailing for the crew thereof. Moreover, they prevent a direct view being had of the wind turbine generators functioning in the different towers and they provide security in the event of any kind of detachment or projection of particles from that device.

The panels are characterised by their great efficiency, their robust mechanical construction and the qualities of impermeability and watertightness that guarantee a long life, permitting perfect functioning of the system even in the toughest weather conditions.

The energy generated by the two systems described will be stored in some accumulator units, preferably located in the lower part of the structure.

A central control will be provided that will control the level of charge of them, and also of discharges, consumptions and contributions of energy to the electrical grid.

Finally, the system will be driven by means of a motor unit composed of two intraboard electric motors. These are capable of generating electricity when not functioning, in other words when not consuming energy, and they will therefore provide the batteries with energy, in addition to having a very low weight.

### BRIEF DESCRIPTION OF THE FIGURES

The attached figures show the different components making up the ship. This concerns a form of embodiment of the invention forming the object of presentation, by way of a non-limiting example.
Figure 1 shows a schematic view in elevation, sectioning those components that are most important in the system with the aim of showing their location and arrangement within the ship.
Figure 2 shows the deck of the ship, with the location of the crew, the towers for the wind turbine generators and the command post.

### MODE OF EMBODIMENT OF THE INVENTION

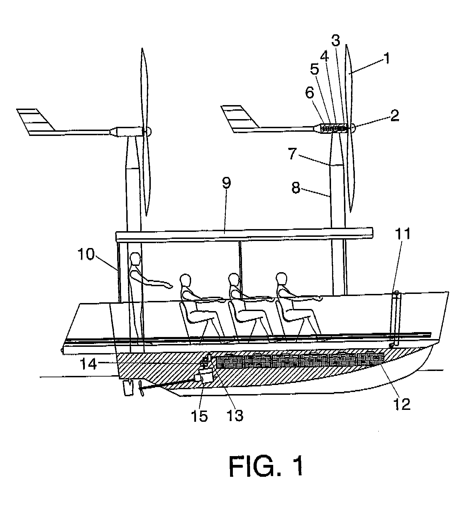

The figures mentioned above number some of the components that we are going to give details of below referring to figure 1.

On the one hand it shows one of the forms of energy generation contained in the ship, which uses the motion of the air: this is the wind turbine generator. Among the different components it comprises, the most important of them have been identified.

Identified with number 1 are the orientable moving blades, which are in charge of capturing the wind and transmitting its power to the bushing, identified with number 2. The bushing for the rotor is coupled to the low speed axle of the wind turbine generator (number 3). This low speed axle connects the rotor bushing to the multiplier, and contains ducts for the hydraulic system in order to permit functioning of the aerodynamic brakes. Identified next with number 4 is the multiplier which has the low speed axle located on its left. Thanks to this factor, this permits the functioning of the electrical generator. It is equipped with a mechanical emergency disc brake. The mechanical brake is used in the event of failure of the aerodynamic brake or during maintenance work on the turbine.

The electrical generator is identified by means of the number 6. It has an electronic controller coupled to it which is continually monitoring the conditions of the wind turbine generator and which controls the orientation mechanism. In the event of any dysfunction (for example, overheating in the multiplier or in the generator), it automatically stops the wind turbine generator and gives the corresponding alarm signal.

The wind turbine generator has an orientation mechanism which permits increased capture of the wind (number 7). All the said mechanisms are located on the towers (number 8). It is generally an advantage to have a tall tower, given that the speed of the wind increases as we move away from ground level.

Numbered with 9 are the solar modules, which form the second source of energy that the ship has. These have a mechanism for being able to modify their inclination and thereby improve their efficiency, adapting themselves according to the angle of incidence of the solar rays during the course of the day. They are located on a structure which also serves to cover the zone where the ship's crew is going to be located (number 10). Also shown in that figure 1, with number 11, is the access ramp for the ship.

Appearing sectioned in the lower part is the hull of the ship, via which can be seen the location of the accumulators, which are in charge of collecting the energy produced by the systems described so far. This concerns an array of accumulators which guarantee sufficient autonomy for sailing. The optimum functioning of the motor unit system is reached with a system of 144 V. This need is met by 12 batteries of 12 V each. They are identified with the number 12.

Between the batteries and the motors is to be found the different monitoring mechanisms for the systems making up the ship. On the one hand, there is the charge regulator. The charge regulators prevent excessive charging of the batteries and protect them against excessive wear, which can shorten their useful life. The electronic circuit charge regulators measure the voltage of the battery, which will be greater while the state of charge of the battery increases At a certain voltage, which differs depending on the type of battery and temperature, the regulator will stop the battery from charging. When the charges are inoperative, the voltage of the batteries starts to fall. At a predetermined level corresponding to the lowest permitted voltage, the regulator resumes charging again. It is identified with the number 13.

Moreover, there appears an energy consumption meter which permits a determination of, among other parameters, the state of charge of the battery and, during discharge, it can measure the length of time remaining before the battery becomes fully discharged. The following functions can be read:
- The voltage
- The charging and discharging current
- The state of charge of the battery
- The time remaining until the battery is completely discharged

Some of the warning alarms can also be adjusted. It is identified with the number 14.

Finally, there appears the intraboard electric motor in the lower part of the hull (15). This type of motor has a higher efficiency than those driven by fossil fuels on account of the losses occasioned by the latter before the energy is delivered to the propulsion system. Some of these losses are on account of the functioning of the water pump, the transmission (due to the reduction gearing), the functioning of the alternator, etc..

It also has to be emphasised that this type of motor has the ability to generate energy when it is not in operation, since it exploits the movement of the water in order to become converted into an electrical generator.

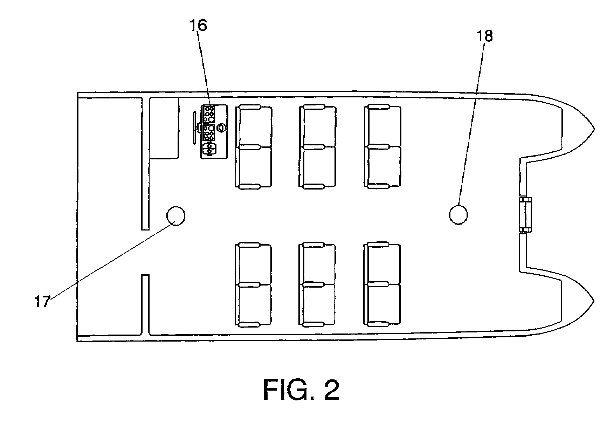

Appearing identified in figure 2 with number 16 is the control post from where the motion of the ship will be controlled and, by means of numbers 17 and 18, the location of the towers supporting the wind turbine generators. Finally, a type of location can be observed for the crew of the ship.

## Claims

1. Ship or floating device self-sufficient in energy consumption, due to its needs coming from the sun and the wind, ecological, due to not contaminating with waste of any kind, contributing to the care of the environment, keeping it clean. It permits noise-free sailing to be enjoyed, in complete harmony with the surroundings.

2. Economically profitable, because its generation and accumulation of electrical energy permits the sale of the surpluses to the general distribution grid.

3. Propulsion system for a ship with dual capture of energy, of the wind and solar types. It will have two horizontal axis wind turbine generators located on the deck of the vessel, which have an automatic orientation system for capture of the greatest wind strength, as well as a stoppage system in the event of the levels of mechanical stress for which they are designed being exceeded.

4. Enclosure for the deck of the vessel composed of high efficiency orientable photovoltaic solar modules, which also have the functionality of covering the zone of action of the wind turbine generators and of protecting the ship's crew.

5. Accumulation of the generated energy in batteries This energy is consumed by means of two electric motors which are in turn capable of charging those batteries when not in operation.

6. Production of electrical energy under special regime. This refers to the connection and sale of surpluses to the electrical grid. It is **characterised by** the possibility of its payment system being complemented by means of reception of a bonus under the terms set down in the regulations.

7. Easy handling of the different devices making up the ship by a single person.

8. Use as a clean ship in rivers and reservoirs, since it does not generate any kind of waste, noise or contamination.

9. Use as a rescue ship and for energy generation in places that are difficult of access or which need a source of clean energy.

10. Use as a ship for interior traffic in ports.

11. Use as a field hospital, thanks to its dimensions and its capacity to produce drinking water and large autonomy of use.
